# EUROPEAN PATENT APPLICATION

(11) **EP 3 496 358 A1**
(43) Date of publication of application: **12.06.2019**
(21) Application number: 17306735.6
(22) Date of filing: 08.12.2017
(51) Int. Cl.: H04L 29/06, H04L 29/08

(54) **DEVICES AND METHODS FOR DATA PROPAGATION IN A DISTRIBUTED NETWORK**

(71) Applicant: THOMSON LICENSING, 92130 Issy les Moulineaux (FR)
(72) Inventor: FEYTONS, Dirk, 2650 EDEGEM (BE); PEETERS, Johan, 2650 EDEGEM (BE)
(74) Representative: Ståhl, Björn Niclas

(57) **Abstract**

In a Distributed Node Concensus Protocol (DNCP) network (100), a first device (110) publishes (S210) node data comprising data, a data identifier and a sequence number, provides the node data to requesting devices (120, 130) in the DNCP network, receives (S220) acknowledgements of reception of the node data from the requesting devices (120, 130), each acknowledgement comprising the data identifier and the sequence number of the node data, and, for the node data, finds (S230) the smallest sequence number among the received acknowledgements and determines that the node data has propagated through the network in case the smallest sequence number is at least equal to the sequence number of the node data. Upon determination that the data has propagated the network, the first device can perform an action that requires the data to have propagated through the network.

## Description

### TECHNICAL FIELD

The present disclosure relates generally to computer networks and in particular to data propagation in distributed networks.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

The Internet Engineering Task Force (IETF) Request for Comments (RFC) 7787 from April 2016 describes the Distributed Node Consensus Protocol (DNCP), which is a generic state synchronization protocol.

A DNCP network comprises a set of nodes compatible with DNCP. Each node in the network has a unique identifier and can publish data in the form of a set of Type-Length-Value (TLV) tuples for other nodes to see. DNCP also describes how a node detects the presence of other nodes, and how to ensure that the nodes have the same knowledge of the data published by the nodes in the network.

DNCP works in a distributed manner. All nodes are to be considered equal; there is no 'master' node.

A node collects the data it wants to publish, determines its node state (a set of metadata attributes for the data), and calculates the network state (a hash value) using its node state and the node states of the other nodes the node knows. This network state is broadcast in the DNCP network (typically using multicast) on every change, and also periodically. A node that receives the network state can compare the received network state and node states with its own version of the network state and node states. In case of a difference, the node connects, typically using unicast, to the originating node to retrieve the data so that the data is consistent with the data in the other nodes in the DNCP network.

This way, with DNCP, each node eventually has the node data of every other node in the DNCP network. It is not necessary that every node can communicate directly with every other node. DNCP thus allows efficient detection and correction of node divergence.

However, DNCP does not provide a way to allow a node to know if other nodes have already receive its data. As there are instances when node divergence can cause problems, for example in case of changes of configuration of the channel over which the nodes in the network communicate, it is important that all of the nodes use the same configuration, which requires the nodes to have the same data.

It will be appreciated that it is desired to have a solution that overcomes at least part of the conventional problems related to propagation and synchronization of data in a network. The present principles provide such a solution.

### SUMMARY OF DISCLOSURE

In a first aspect, the present principles are directed to a first device for data propagation in a Distributed Node Concensus Protocol network. The first device includes an interface configured to publish node data comprising data, a data identifier and a sequence number, provide the node data to requesting devices in the DNCP network and receive acknowledgements of reception of the node data from the requesting devices, each acknowledgement comprising the data identifier and the sequence number of the node data. The first device further includes at least one hardware processor configured to, for the node data, find the smallest sequence number among the received acknowledgements and determine that the node data has propagated through the network in case the smallest sequence number is at least equal to the sequence number of the node data.

Various embodiments of the first aspect include:
- That the at least one hardware processor is further configured to perform an action upon determination that the node data has propagated through the network. The action can use the node data. The node data can relate to a configuration of communication between the first device and the requesting devices.
- That the at least one processor is configured to determine that the node data has propagated through the network upon determination that the node data has propagated to requesting devices that are peers of the first device.

In a second aspect, the present principles are directed to a second device in a Distributed Node Concensus Protocol (DNCP) network. The second device includes an interface configured to request published node data from an originating device, receive requested node data from the originating device, the node data comprising data, a data identifier and a sequence number, publish acknowledgements of reception of the node data, each acknowledgement comprising the data identifier and the sequence number of the node data, and receive acknowledgements of reception of the node data from the further devices, each acknowledgement comprising the data identifier and the sequence number of the node data. The second device further includes at least one hardware processor configured to, for the node data, find the smallest sequence number among the received acknowledgements and determine that the node data has propagated through the network in case the smallest sequence number is at least equal to the sequence number of the node data.

Various embodiments of the second aspect include:
- That the at least one hardware processor is further configured to perform an action upon determination that the node data has propagated through the network. The action can use the node data. The node data can relate to a configuration of communication between the first device and the requesting devices.
- That the at least one processor is configured to determine that the node data has propagated through the network upon determination that the node data has propagated to further devices that are peers of the second device.

In a third aspect, the present principles are directed to a first method for data propagation in a Distributed Node Concensus Protocol (DNCP) network. A first device publishes node data comprising data, a data identifier and a sequence number, provides the node data to requesting devices in the DNCP network, and receives acknowledgements of reception of the node data from the requesting devices, each acknowledgement comprising the data identifier and the sequence number of the node data, and, for the node data, finds the smallest sequence number among the received acknowledgements, and determines that the node data has propagated through the network in case the smallest sequence number is at least equal to the sequence number of the node data.

In an embodiment of the third aspect, the first device further performs an action upon determination that the node data has propagated through the network.

In a fourth aspect, the present principles are directed to a method at a second device in a Distributed Node Concensus Protocol (DNCP) network. The second device requests published node data from an originating device, receives requested node data from the originating device, the node data comprising data, a data identifier and a sequence number, publishes acknowledgements of reception of the node data, each acknowledgement comprising the data identifier and the sequence number of the node data, receives acknowledgements of reception of the node data from the further devices, each acknowledgement comprising the data identifier and the sequence number of the node data, and, for the node data, finds the smallest sequence number among the received acknowledgements, and determines that the node data has propagated through the network in case the smallest sequence number is at least equal to the sequence number of the node data.

In a fifth aspect, the present principles are directed to a computer program comprising program code instructions executable by a processor for implementing the steps of a method according to any embodiment of the third aspect.

In a fifth aspect, the present principles are directed to a computer program product which is stored on a non-transitory computer readable medium and comprises program code instructions executable by a processor for implementing the steps of a method according to any embodiment of the third aspect.

### BRIEF DESCRIPTION OF DRAWINGS

Preferred features of the present principles will now be described, by way of non-limiting example, with reference to the accompanying drawings, in which:
Figure 1 illustrates an exemplary network according to an embodiment of the present principles;
Figure 2 illustrates an exemplary method for data propagation and propagation verification according to an embodiment of the present principles.

### DESCRIPTION OF EMBODIMENTS

In this description, the following DNCP expressions are used:
- **Node:** a device that uses DNCP. As already mentioned, each node has an identifier that uniquely identifies the node within the DNCP network to which it belongs.
- **Peer:** a network node with which a node communicates (or can communicate).
- **Node data:** the set of data published and owned by a node. The data is organized in TLV tuples, each with an identifier that is unique within the DNCP network. The DNCP specification predefines some TLVs; applications making use of DNCP can define additional TLVs.
- **Node state:** a set of metadata attributes for node data.
- **Network state:** a hash value that represents the current state of the entire network, as known by a node. The network state is a combination of all the states of the known nodes.

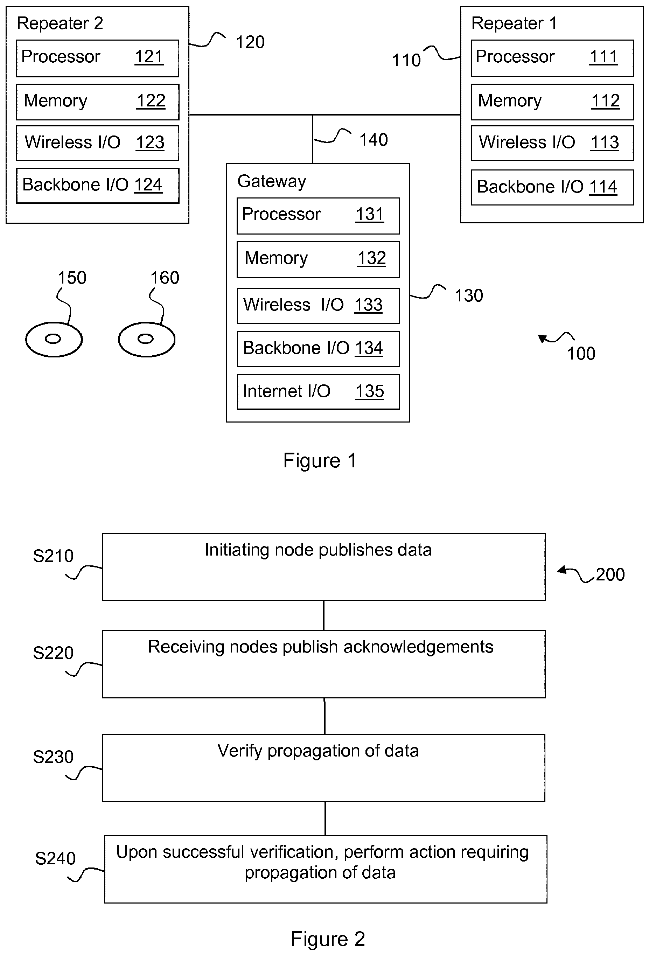

Figure 1 illustrates an exemplary DNCP network 100 according to an embodiment of the present principles. The DNCP network 100 includes three nodes 110, 120, 130 connected through a backbone connection 140, which can be wired or wireless.

As an example, the first node 110 is a first Wi-Fi repeater, the second node 120 is a second Wi-Fi repeater and the third node 130 is a Wi-Fi access point. The skilled person will understand that the given devices and connection set-up are only examples and that other set-ups and devices using other technologies may also be used in the DNCP network 100.

The Wi-Fi repeaters 110, 120 include at least one hardware processing unit ("processor") 111, 121, memory 112, 122 and at least one communications interface 113, 123, in the example a Wi-Fi interface, configured to communicate with other mobile stations, and a backbone interface 114, 124 configured for communication with the other devices connected to the connection 140. Any suitable communication standard, such as Wi-Fi (IEEE 802.11), Ethernet (IEEE 802.3), and PLC (power-line communication), could be used for the communication over the connection 140. In one embodiment, the communications interface 113, 123 and the backbone interface 114, 124 are implemented as a single interface.

The Wi-Fi repeaters 110, 120 and the gateway 130 are preferably configured to operate on different channels, i.e. different frequencies, so as to avoid interference. The channel allocation, which preferably is dynamic, can be performed in any suitable conventional way.

The gateway 130 includes at least one hardware processing unit ("processor") 131, memory 132, a Wi-Fi interface 133, a backbone interface 134 configured for communication with other devices - i.e. the repeaters - connected to the backbone connection 140, and an Internet interface 135 for communicating with the Internet and to permit interconnection between the nodes in the DNCP network 100 and the Internet.

The processors 111, 121, 131 of the nodes 110, 120, 130 are further configured to perform the method according to an embodiment of the present principles, an example of which is described in Figure 2. As nodes are equals in a DNCP network, any one of the nodes can initiate the method 200 in Figure 2; indeed, a plurality of nodes can perform the method in parallel, as initiating nodes and/or receiving nodes. Computer program products 150 and 160, stored on non-transitory computer readable media, include comprises program code instructions executable by a processor for implementing the steps of the method illustrated in Figure 2, respectively in an initiating device and a receiving device.

In step S210, an initiating node, say Repeater 1 110, publishes a TLV whose propagation is to be monitored. In DNCP, "publishing" means updating the node's node data, recalculating the resulting network state and announcing the recalculated network state. Typically the node data is not included (but it can be, as DNCP allows this). Other nodes will see the recalculated network state, note that they are not synchronised, which will cause them to connect to the originating node to fetch the node data. This will then allow the receiving nodes to recalculate their network state so that it is the same throughout the DNCP network.

It is noted that it is possible that some TLVs need not be monitored. Apart from the TLV identifier and the data, the TLV further includes a sequence number. The sequence number can be included in a specific field, but it is also possible to append it to other data, preferably separated by a control character. Preferably the initial sequence number is 1 and whenever the data is changed, by the initiating node or by another node, the sequence number is incremented by 1.

Upon reception of the TLV, the receiving nodes - Repeater 2 120 and the gateway 130 - publish, in step S220, a TLV that includes acknowledgements of the data received from the other nodes. In case the TLV already existed, it is updated; otherwise it is created. An acknowledgement is a tuple with the TLV identifier, the identifier of the receiving node and the sequence number of the received TLV.

In step S230, the nodes can verify that the TLV has propagated to the nodes in the DNCP network. Step S230 can be performed by one or more, possibly all, of the nodes in the DNCP network, whether they are initiating or receiving nodes. The verification can for example be made before performing an action that requires the nodes in the network to have the same version of the TLV.

Upon successful verification, the node then performs the action, in step S240,

When an initiating node N_{self} publishes a TLVₓ with updated data that has sequence number Sₓ, and it wants to perform action A when this update has propagated through the network, it can run the following algorithm, where TLV_{acks} are acknowledgements:

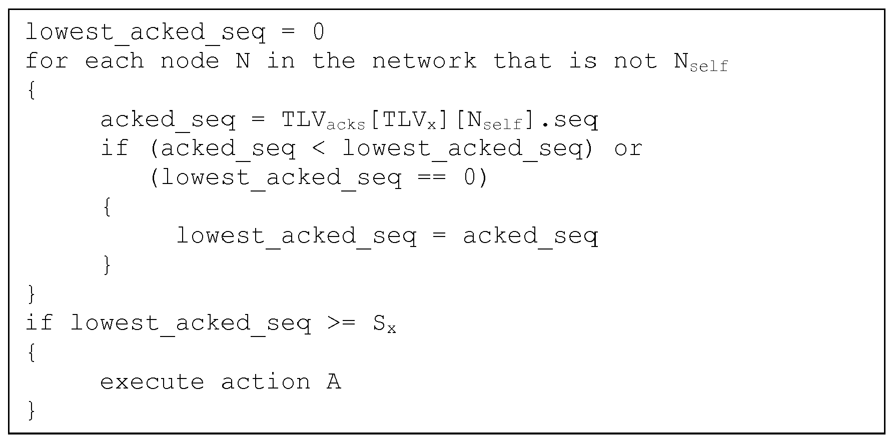

Put another way, the initiating node checks the acknowledgements received from all other nodes for TLVₓ of node N_{self} and takes the smallest sequence number therein. If the smallest sequence number is equal to or greater than the sequence number associated with the updated TLVₓ, then TLVₓ has propagated through the network and action A can be executed.

When a receiving node N_{self} receives an updated TLVₓ with sequence number Sₓ from a node N_{y} and it wants to perform action A when TLVₓ update has propagated through the network, the receiving node can run the following algorithm, where TLV_{acks} are acknowledgements:

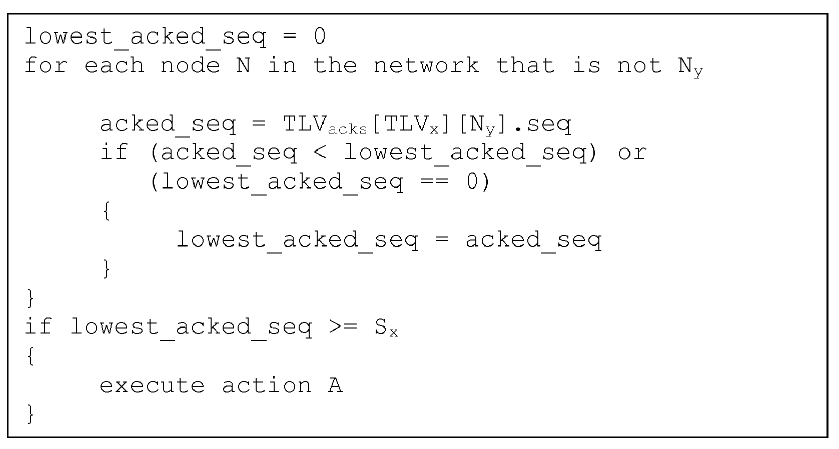

Put another way, the receiving node checks the acknowledgments received from all nodes other than N_{y} for TLVₓ of node N_{y} and takes the smallest sequence number. If the smallest sequence number is greater than or equal to the sequence number Sₓ associated with the updated TLVₓ, then TLVₓ has propagated through the network and action A can be executed.

In some cases it is sufficient for the data to propagate to the immediate neighbours, i.e. the peers as determined by DNCP, of a node rather than to the whole DNCP network. If so, the algorithms hereinbefore need only be modified to iterate over the peers rather than all the nodes.

As will be appreciated, the present principles can provide a way of monitoring data propagation through a network that can implement DNCP.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A first device (110) for data propagation in a Distributed Node Concensus Protocol (DNCP) network (100), the first device (110) comprising:
an interface (114) configured to:
publish node data comprising data, a data identifier and a sequence number;
provide the node data to requesting devices (120, 130) in the DNCP network; and
receive acknowledgements of reception of the node data from the requesting devices (120, 130), each acknowledgement comprising the data identifier and the sequence number of the node data; and
at least one hardware processor (111) configured to, for the node data:
find the smallest sequence number among the received acknowledgements; and
determine that the node data has propagated through the network in case the smallest sequence number is at least equal to the sequence number of the node data.

2. The first device of claim 1, wherein the at least one hardware processor is further configured to perform an action upon determination that the node data has propagated through the network.

3. The first device of claim 2, wherein the action uses the node data.

4. The first device of claim 3, wherein the node data relates to a configuration of communication between the first device and the requesting devices.

5. The first device of claim 1, wherein the at least one processor is configured to determine that the node data has propagated through the network upon determination that the node data has propagated to requesting devices that are peers of the first device.

6. A second device (120, 130) in a Distributed Node Concensus Protocol (DNCP) network (100), the second device (120, 130) comprising:
an interface (124, 134) configured to:
request published node data from an originating device (110);
receive requested node data from the originating device (110), the node data comprising data, a data identifier and a sequence number;
publish acknowledgements of reception of the node data, each acknowledgement comprising the data identifier and the sequence number of the node data;
receive acknowledgements of reception of the node data from the further devices (120, 130), each acknowledgement comprising the data identifier and the sequence number of the node data; and
at least one hardware processor (121, 131) configured to for the node data:
find the smallest sequence number among the received acknowledgements; and
determine that the node data has propagated through the network in case the smallest sequence number is at least equal to the sequence number of the node data.

7. The second device of claim 6, wherein the at least one hardware processor is further configured to perform an action upon determination that the node data has propagated through the network.

8. The second device of claim 7, wherein the action uses the node data.

9. The second device of claim 8, wherein the node data relates to a configuration of communication between the second device and the originating device.

10. The second device of claim 6, wherein the at least one processor is configured to determine that the node data has propagated through the network upon determination that the node data has propagated to further devices that are peers of the second device.

11. A first method for data propagation in a Distributed Node Concensus Protocol (DNCP) network (100), the method comprising at first device (110):
publishing (S210), by an interface (114), node data comprising data, a data identifier and a sequence number;
providing, by the interface (114), the node data to requesting devices (120, 130) in the DNCP network; and
receiving (S220), by the interface (114), acknowledgements of reception of the node data from the requesting devices (120, 130), each acknowledgement comprising the data identifier and the sequence number of the node data; and
for the node data:
finding (S230) by at least one hardware processor (111) the smallest sequence number among the received acknowledgements; and
determining that the node data has propagated through the network in case the smallest sequence number is at least equal to the sequence number of the node data.

12. The method of claim 11, further comprising performing (S240) by the at least one hardware processor an action upon determination that the node data has propagated through the network.

13. A method at a second device (120, 130) in a Distributed Node Concensus Protocol (DNCP) network (100), method comprising:
requesting, by an interface (124, 134), published node data from an originating device (110);
receiving, by the interface (124, 134), requested node data from the originating device (110), the node data comprising data, a data identifier and a sequence number;
publishing, by the interface (124, 134), acknowledgements of reception of the node data, each acknowledgement comprising the data identifier and the sequence number of the node data;
receive, by the interface (124, 134), acknowledgements of reception of the node data from the further devices (120, 130), each acknowledgement comprising the data identifier and the sequence number of the node data; and for the node data:
finding, by at least one hardware processor (121, 131), the smallest sequence number among the received acknowledgements; and
determining, by the at least one hardware processor (121, 131), that the node data has propagated through the network in case the smallest sequence number is at least equal to the sequence number of the node data.

14. Computer program comprising program code instructions executable by a processor for implementing the steps of a method according to at least one of claims 11 and 12.

15. Computer program product which is stored on a non-transitory computer readable medium and comprises program code instructions executable by a processor for implementing the steps of a method according to at least one of claims 11 and 12.
